# EUROPEAN PATENT APPLICATION

(11) **EP 1 388 787 A1**
(43) Date of publication of application: **11.02.2004**
(21) Application number: 03254883.6
(22) Date of filing: 06.08.2003
(51) Int. Cl.: G06F 9/445, G06F 9/44

(54) **Updating of software**

(30) Priority: 06.08.2002 GB 0218218
(71) Applicant: Aardwork Software Limited, Brackley, Northamptonshire NN13 5LT (GB)
(72) Inventor: Hunt, Michael, Brackley, Northamptonshire NN13 5LT (GB); Hunt, David, Abingdon, Oxfordshire OX14 1XY (GB); Treadwell, Anthony, Over Norton, Oxfordshire OX7 5PR (GB)
(74) Representative: Downing, Michael Philip

(57) **Abstract**

A software update system is disclosed, together with a corresponding method. These comprise a server holding a database, a client software, and a communications medium to allow the client and server to communicate, the database including, for a plurality of software titles, a title identifier, a version identifier for that title, and a patch location, the client being adapted to use the title identifier to locate a software title resident on a computer system hosting the client, to use the version identifier to identify the present update level of that title, and to use the patch location to allow the download of a patch for that title. It is preferred that the title identifier includes the file name of an executable file associated with the software title, and also that the version identifier includes at least one of the version number, the byte size of an executable file associated with the software title, and the version details encoded in the file properties of the executable file. The client can interrogate the Windows Registry to ascertain the version number. The patch location will usually be an Internet URL. It is preferred that the client identifies available patches for selection by the user. The user may wish to choose to download certain patches but not others, for example if bandwidth is limited.

## Description

The present invention relates to a system and a method for allowing users to update their software easily and swiftly.

Software is commonly updated as time progresses. Programming errors ("bugs") are discovered, and the developer releases patches to eliminate these. The software can be improved and the improved version released for install by licensed users. Updates such as these are typically released via the Internet, requiring users to connect to the server of the developer (or a third party holding the patches on behalf of the developer) and identify the updates required.

This is an inefficient process. Users may be unaware that a patch is available, for example, or they may be unaware of the location of the patch for download. Failure to install the patches may leave the computer system vulnerable to error or outside attack, and will not present the developer's software in the best light. Accordingly it is in the interests of both the developer and user to update the software.

The present invention seeks to do so more easily. It seeks to identify the required or available patches and obtain these on behalf of the user.

The present invention therefore provides a software update system comprising a server holding a database, a client software, and a communications medium to allow the client and server to communicate, the database including, for a plurality of software titles, a title identifier, a version identifier for that title, and a patch location, the client being adapted to use the title identifier to locate a software title resident on a computer system hosting the client, to use the version identifier to identify the present update level of that title, and to use the patch location to allow the download of a patch for that title.

The invention also relates to a method of updating software, comprising the provision of a server holding a database, a client software, and a communications medium to allow the client and server to communicate, the database including, for a plurality of software titles, a title identifier, a version identifier for that title, and a patch location, the method comprising the steps of using the title identifier to locate a software title resident on a computer system hosting the client, using the version identifier to identify the present update level of that title, and using the patch location to allow the download of a patch for that title.

It is preferred that the title identifier includes the file name of an executable file associated with the software title, and also that the version identifier includes at least one of the version number, the byte size of an executable file associated with the software title, and the version details encoded in the file properties of the executable file. The client can interrogate the Windows Registry to ascertain the version number.

The patch location will usually be an Internet URL.

It is preferred that the client identifies available patches for selection by the user. The user may wish to choose to download certain patches but not others, for example if bandwidth is limited.

An embodiment of the present invention will now be described, by way of example, with reference to the accompanying figures, in which;
Figure 1 shows the login process;
Figure 2 shows the download of information to the client;
Figure 3 shows the client operation;
Figure 4 shows the selection of patches for download;
Figure 5 shows the download of a selected patch;
Figure 6 shows the install of a selected patch; and
Figure 7 shows in diagrammatic form the information presented to a user to allow selection of patches.

In the following description, the operation of the software will be described in relation to game software. This is because game software is typically provided by a wide range of developers operating independently. In other fields, such as office suites, the entire suite will usually be provided by a single developer who can then issue updates with more ease. Accordingly, the principal need for the software exists in the gaming community. However, it should be understood that the operation of the invention is not specific to game software and could in principle be applied to any software. The scope of this invention is not therefore limited in this way.

Under existing conditions, a PC gamer will be able to update a game by the following means:
a) If the game is an on-line, Internet-based game, it may detect that the gamer needed to upgrade and may provide the wherewithal for that to be effected. However, not all on-line games perform this.
b) The PC gamer may use an Internet search engine and locate the patch or new version via a web-link URL. The PC gamer will perform all processes manually.

The present invention seeks to minimise the effort and time expended by the PC Gamer to maintain the latest software level for any PC game.

The system comprises two distinct and, at times separate, pieces of software: the Server and the Client. The Server contains a database of PC game details. The Client is used as a mechanism of determining the games a PC user has installed, and accesses the Server to allow the user to download and install the relevant game patches and new versions.

### The Server

The Server will be the sole medium for the database, which contains all details of the PC game patches and new versions. It will also contain all the transactional data when customers purchase the software Client and Service. This will include the purchase date, version of the Client, the customer's contact details and credit card details. It will also store details of the customers downloads so as to generate a profile of the types of games that any given customer uses. This information could then be useful to PC Game Producers and Internet Portals.

The database can be constructed using available database languages such as Microsoft™ SQLServer. Controlling software for updating and modifying the database can be written in any suitable language such as C++, Microsoft™ Visual Basic or the like. The Client can also update the database.

The Server infrastructure can also house a website offering news, updates, reviews, patch reviews and discussion forums for the Customer base.

### The Client

The Client can (again) be written in any suitable language such as C++, or Microsoft™ Visual Basic. Its main function is to act as a medium between the Server and end user. It provides functionality to check the existing games installed on the user's PC, show the patches or new versions available and allow the user to download and install them and a browser window to allow the user to connect to the Game Shadow server for information.

When in either an off-line or on-line state the client has the ability to search the PC's hard drive and Windows™ Registry for existing games and relevant version number data.

When on-line, the client can provide the following features;
a) A method of connecting to the website(s) hosted on the server or in association therewith.
b) A method of contacting the software providers, for example via email.
c) A method of accessing an external data source such as an FTP or HTTP site.
d) A method of accessing an FTP website in order to enquire or download documents and features about our company or products. This will ideally not include game patches.
e) A method of connecting to the server database in order to log into the service offered by the invention.
f) A method of connecting to the server database in order to begin the download of game patches and patch-related information.
g) A method of disconnecting from the service and logging out of the database.

The providers of the system need to provide the service of constantly updating of the server database with PC game patch and new version details. This will typically be effected by a combination of people and software. The patch and new version details will be input via a software import and update mechanism and also manually by people where the data cannot be gleaned in electronic format.

### Process Overview

The following is a detailed description of the processes used by the invention in operation. There are six main processes detailed, and each of these performs a specific function, which will ideally be completed in order.

### 1 - Login

The login process is used to connect the Client software to the Game Shadow Server. The Client end instigates the connection and the user is asked to enter both a username and a password to identify themselves to the Server. This username/password combination is unique to each user and is defined when the user purchases the software and enters his/her registration details. At this stage a licence key is generated and stored at both the client PC and in the server database against the account of the purchaser.

The login serves multiple purposes.
a) It creates a connection between the Client Software and the Server to facilitate the download of patch information.
b) It identifies the Client to the server to ensure that a valid username & password combination and licence key is used.
c) It allows the Server to confirm that there is only one concurrent session using that licence key. This means that should a version of the client software be pirated and distributed, even if the correct username & password combination is used, a check can be made to ensure that only one session for the unique licence key is running concurrently. Should more than one session for any given licence key attempt to connect to the database simultaneously, a flag is raised against the licence-holder's account for further investigation.

### 2 - Information Download

Once the connection to the database is open, the client can download a file (gameslist.txt) containing the most recent patch information, onto the client PC. It achieves this by interrogating the patch information database on the Server and asking for the complete list of all patches available. The gameslist.txt file contains the information from the database in a suitable format to enable it to be extracted. The use of a .txt formatted file is not essential but it does allow a reduced download time as only the essential information is transferred.

The file contains the following information about each patch:
- Game Name
- Game ID
- Game Executable Name (File Name)
- Byte size (File Size)
- Version ID
- Property Name
- Property Value
- Version Name
- Country Code

'Game Name' is the actual name of the game.

'Game ID' is a games unique identification number of the game within the GameShadow database held on the server.

'Game Executable Name' is the filename of the .exe that runs to play the game. These may be different, for example a game could be called 'Master of Shadows' (Game Name) however the executable name could be mastshad.exe.

'Byte size' is the actual physical size in bytes of the game executable.

'Version ID' is the unique identification number of the Version within the GameShadow database held on the server.

'Property Name' is the name of the property that will be used to identify uniquely the file we are examining. For example,the 'Version' property can be used to identify one file, whereas the 'Created Date' may be a more reliable identifier for a different file.

'Property Value' is the actual value of the property used to uniquely identify a file.

'Country Code' is a code to enable the software to distinguish between different countries. For example, some US software will be slightly different from the same release in the UK, meaning that the file size and patches available will be different. Any patch without a country code is assumed to be a global patch and can be used in any country.

### 3 - Search

The search process is used to locate the games that have been installed on the Client PC and identify their current version details. This is done by searching through the hard disk of the Client PC and storing the name of every executable into memory. The latest patch information file (gameslist.txt) is then read into memory. Each executable is then compared in a strict order to find which version of that particular game is being used.

The order is as follows:
a) For each executable found, the name is compared against the list of Game Executable names within the gameslist.txt file.
b) Once a match is found the version must be analyzed.
c) The byte size (file size) of the executable is compared to that of the file size information for that game.
d) Once the file size had been matched, the properties of the executable are compared against the properties held for that game.
e) If a country code is present that this is compared against the country code contained within the client's user registration details.
f) Once this is matched the correct Game and Version information has been identified.
g) Once all the executables have been identified, a list is written to the local Client PC containing the information about all the games and patches that are installed on the Client PC. The list is called Locallist.txt and is of the same format as Gameslist.txt.

As an alternative, the Client software can also perform comparisons against the information held on each game within the Registry of the PC. However, many game producers do not enter the version information into the Windows™ Registry. Therefore identification of a game's version by checking the Registry may, at present, be insufficiently reliable. However, this method may be more reliable in the future, and can provide a useful cross-check or confirmation at present.

If the client correctly identifies that the game is installed (by comparing the executable name) but cannot calculate the version (e.g. the byte size and properties version do not match), the user is allowed to manually enter the information through a configuration screen to tell the client which version of the game is being run.

Should a user have a game that the client does not know of, the user can manually enter the game information and the server is be sent an email to include the user's new information in the next release of the patch information database. , Verification checks should obviously be performed to validate any information given to the server in this way.

### 4 - Select

The selection process enables the user to select the patches they would like to apply to each individual game.

The user is presented with a list of games that are located on the Client PC. When a user selects a game they are interested in, they are shown the current version and a list of all possible versions to which they can upgrade. On selecting a game patch to which they are interested in upgrading, the Client accesses the http address (internet address) of the page containing the information about the particular patch. The information from the page is displayed so the user can make an informed decision on whether they wish to download and install this patch.

### 5 - Download

The download process enables the user to transfer the data for the patch they wish to install from the patch location on the Internet onto a sub-directory of the Client PC ready for installation.

The user selects a patch for downloading and presses the download button. The client then interrogates the local patch information file (locallist.txt) on where the location of the patch is (http internet address). A connection is made to this location from the Client PC and the Client instigates the download. Information about how far a download has progressed is given in a separate window.

Multiple downloads can be handled simultaneously. A user can activate one download and, while it is running in the background, set off further downloads. The download code also has break/connect failsafe code installed. Such software is known and available from third parties. This means that the download code will try to reconnect if a download was broken for any reason.

### 6 - Install

On selecting a patch from the list downloaded onto the Client PC and confirming that an installation is required, the Client Software runs the specific installation executable for the patch. Once the patch has been installed, a reboot may be required. This information will be displayed when the patch installation is complete.

### Schematic Illustration

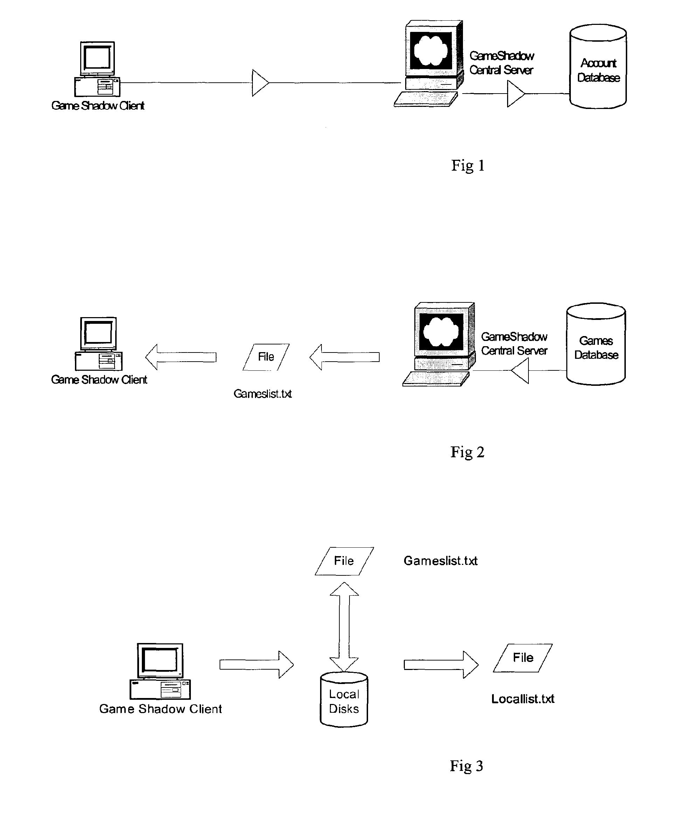

The above processes are shown schematically in figures 1 to 7.

Figure 1 shows the login process. The client software is run from the client PC. The user is asked to connect to the server. Upon entering the username & password combination, the account database is accessed to validate the login and account information. A check is performed to make sure that only one connection is open using this account name to prevent multiple concurrent uses of a single account.

Figure 2 shows the latest information process. Once the user's login has been validated, the user can ask for the latest patch information to be downloaded onto the client PC. The games database is accessed and the latest file (Gameslist.txt) is automatically downloaded onto the client PC.

Figure 3 shows the local search process by the client software. Once the Gameslist.txt file has been downloaded onto the Client PC, the user can ask the software to perform a search on the local disk drives to examine which games the Client PC has installed. The search will look at every file in every directory and perform a comparison report against the Gamelist.txt file to calculate which games are installed and which versions of those games are installed. This is done by comparing, the filename, the properties of the file, the registry information contained about the file, and the file size itself. By comparing all this information, the client software can decide with a very high accuracy, which version of a game is installed. The user also has an option to enter the game information manually, should they prefer. The output file containing the list of games held in the client PC is called locallist.txt and contains the list of games and file locations of the games that have been found including Game name, Location on client PC, File name, Byte Size, Version ID, Properties information and version information.

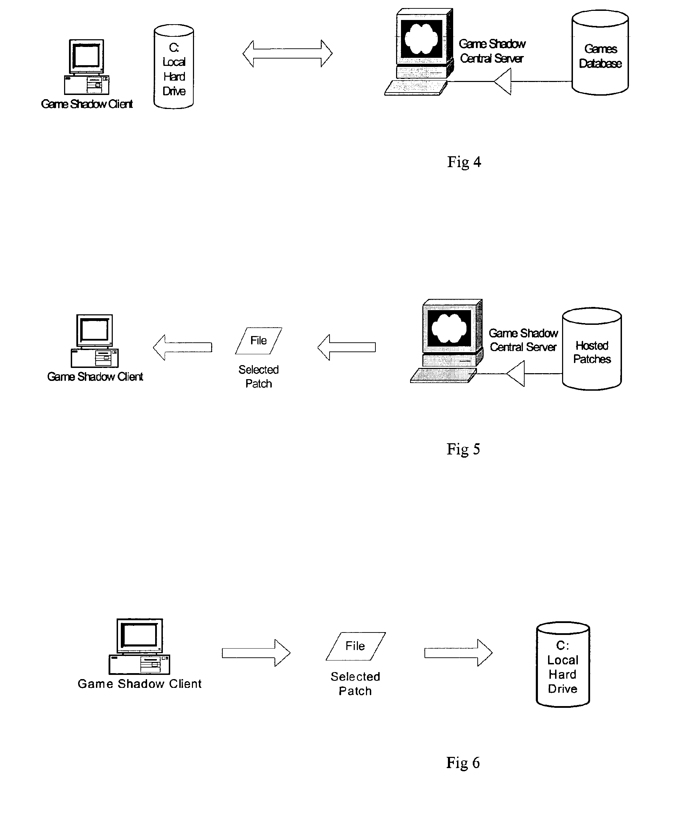

Figure 4 shows the selection process. Once the client knows which games are installed on the local PC, the user can begin the selection process of deciding which game patches they would like to download and install. The user is presented with a list of the games that are currently installed on the local PC and on selecting a game, the current version is displayed along with all the possible patches that can be applied to this game to update it. As the user selects a patch, the client software examines the locallist.txt file and using information from here, connects to the server to display the relevant information about the selected patch on the client PC. The information is held as a web page on the server and contains relevant information about the patch including file size of the patch, number of downloads of the patch and exactly what enhancements the patch applies to the game.

Figure 5 shows the download process. Once the user has selected a patch, a download process begins. On pressing download the client examines the locallist.txt and using the information from here, interrogates the GameShadow database to find out where the patch is hosted on the Internet. The download manager then starts a process to begin the download procedure in the background. Multiple downloads can be run simultaneously. The user is given the information on how far the download has progressed and an estimated time of completion.

Figure 6 shows the install process. On selecting the install option the user is presented with a list of all the current patches that reside on the Local PC. The user can then select a patch from the list and begin the installation process. The patch will then be installed as per the instructions given by the patch producer-this may require a reboot of the client PC following the installation process.

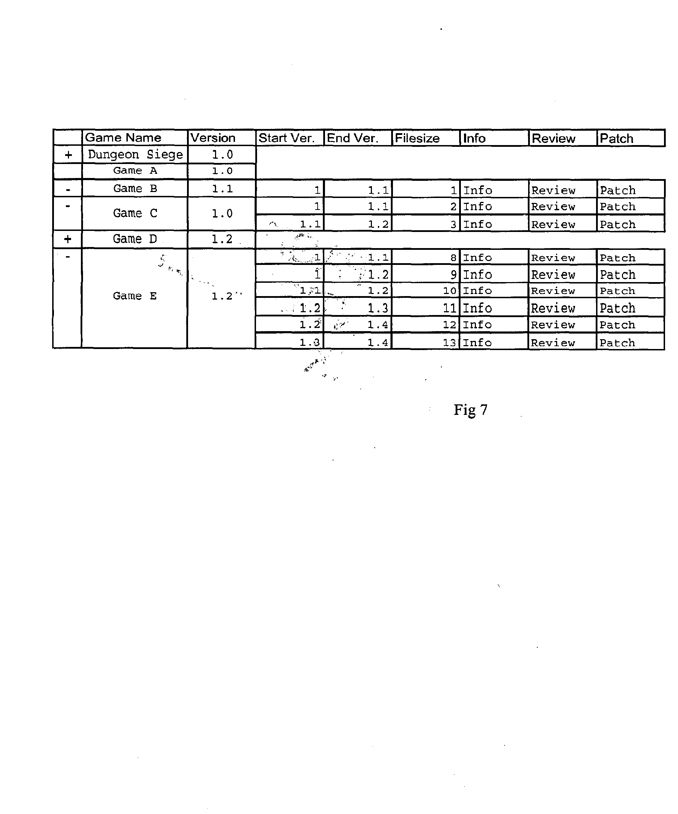

Figure 7 shows the download manager window. This is a visual representation of the number of games that need patching, and how many patches needs to be applied to each game to be on the latest version of the game. A list of all the games that are installed on the client PC, along with their current versions is presented to the user. This information comes from the file Locallist.txt that has been created as part of the "Search Client Process".

The background colour of the 'Version' boxes is either white or blue. A white background means that the game is up-to-date, whereas a blue background means that there are more recent patches available for this game.

Each of the listed games can be 'clicked' on to expand the information about the game. The expanded list shows all the patches available for the specific game. These patches are also colour coded (this can be changed under preferences) as follows:
- Red Background - This patch has already been applied to this game.
- Yellow Background - This is the patch level the game is currently patched to.
- Green Background - This patch needs to be applied to the game to bring it up-to-date.

For each of the patches listed, the following information is displayed:
- Start Version - This is the version number that the game must be on BEFORE this patch can be applied.
- End Version - This is the version number that the game will become AFTER the patch has been applied.
- File Size - This is the size in bytes of the patch. This gives the information to the user before the patch is downloaded, of how large the patch is going to be and will let them make an informed decision as to whether they would like to download a patch that may take a very long time to download.
- Info - This is a hyperlink to the information stored about each patch. This information will include the enhancements made in the patch, the patch history, and whether the patch causes any side effects such as preventing the user from loading previously saved games, etc.
- Review - This is a hyperlink to the review pages held on the Game Shadow website, giving information on the patch as written by other users who have already downloaded and applied the patch.

Patch - This is a hyperlink that will start the download of the specified patch. Multiple downloads can be activated simultaneously.

Figure 7. is a screen shot of the download manager displaying the expanded views of the information available for each game and each patch. In practice, appropriate colour coding would be used to emphasise salient points such as which program required updating.

It will be appreciated that many variations may be made to the above-described embodiment without departing from the scope of the present invention.

## Claims

**1.** A software update system comprising a server holding a database, a client software, and a communications medium to allow the client and server to communicate, the database including, for a plurality of software titles;
a) a title identifier,
b) a version identifier for that title
c) a patch location;
the client being adapted to use the title identifier to locate a software title resident on a computer system hosting the client, to use the version identifier to identify the present update level of that title, and to use the patch location to allow the download of a patch for that title.

**2.** A software update system according to claim 1 in which the title identifier includes the file name of an executable file associated with the software title.

**3.** A software update system according to claim 1 or claim 2 in which the version identifier includes at least one of the version number, the byte size of an executable file associated with the software title, and the version details encoded in the file properties of the executable file.

**4.** A software update system according to claim 3 in which the client is adapted to interrogate the Windows Registry to ascertain the version number.

**5.** A software update system according to any one of the preceding claims in which the patch location is an Internet URL.

**6.** A software update system according to any one of the preceding claims in which the client is adapted to identify available patches for selection by the user.

**6.** A method of updating software, comprising the provision of a server holding a database, a client software, and a communications medium to allow the client and server to communicate, the database including, for a plurality of software titles;
d) a title identifier,
e) a version identifier for that title
f) a patch location;
the method comprising the steps of using the title identifier to locate a software title resident on a computer system hosting the client, using the version identifier to identify the present update level of that title, and using the patch location to allow the download of a patch for that title.

**7.** A method of updating software according to claim 6 in which the title identifier includes the file name of an executable file associated with the software title.

**8.** A method of updating software according to claim 6 or claim 7 in which the version identifier includes at least one of the version number, the byte size of an executable file associated with the software title, and the version details encoded in the file properties of the executable file.

**9.** A method of updating software according to claim 8 including the step of interrogating the Windows Registry to ascertain the version number.

**10.** A method of updating software according to any one of the preceding claims in which the patch location is an Internet URL.

**11.** A method of updating software according to any one of the preceding claims in which the client identifies available patches for selection by the user.
